# FASCICULE DE BREVET EUROPEEN

(11) **EP 2 331 434 B1**
(45) Date de publication et mention de la délivrance du brevet: **20.06.2012**
(21) Numéro de dépôt: 09784486.4
(22) Date de dépôt: 08.07.2009
(51) Int. Cl.: B65G 47/14

(54) **DISPOSITIF DE DISTRIBUTION AUTOMATIQUE DE COMPOSANTS**
VORRICHTUNG ZUR AUTOMATISCHEN ABGABE VON TEILEN
AUTOMATIC DISTRIBUTION DEVICE FOR PARTS

(30) Priorité: 10.07.2008 FR 0854701
(43) Date de publication de la demande: 15.06.2011
(73) Titulaire: Delattre, Jean-Yves, 59134 Fournes En Weppes (FR)
(72) Inventeur: Delattre, Jean-Yves, 59134 Fournes En Weppes (FR)
(74) Mandataire: Cochonneau, Olivier
(86) Numéro de dépôt international: PCT/FR2009/051354
(87) Numéro de publication internationale: WO 2010/004211

(56) Documents cités:
- EP-A- 0 295 382
- WO-A-2006/070643
- JP-A- 2000 025 930

## Description

La présente invention concerne un dispositif de distribution automatique de composants, un tel dispositif trouvant son application sur des chaînes de fabrication ou de montage de produits constitués de plusieurs pièces assemblées notamment au moyen desdits composants. L'homme du métier concerné par la présente invention est donc tout particulièrement le fabricant de dispositifs automatisés de distribution de composants, voire plus généralement le fabricant de chaînes de fabrication ou de montage de produits.

En outre, le dispositif décrit selon l'invention requiert pour sa mise en oeuvre une spécificité desdits composants. En effet, ces derniers doivent nécessairement être munis d'au moins d'une tête et d'un axe de manière à former un épaulement circulaire, tel que sur des vis, voire à former une gorge circulaire, tel que sur des agrafes plastiques utilisées chez les équipementiers.

On connaît actuellement des dispositifs de distribution de composants par convoyeurs à vis (voir par example le document WO-A- 2006/070643) et par vibration de ceux-ci au moyen de bols vibrants. Dans le cas des bols vibrants, les composants sont extraits puis acheminés vers un ou plusieurs points de montage, ce qui nécessite une étude spécifique de transfert de ces composants, propre à chaque application. Cette étude se traduit en général par des coûts élevés et des délais longs pour la réalisation des moyens de montage. Par ailleurs, ces moyens de montage peuvent s'avérer complexes et difficiles à utiliser.

On notera également que dans le cas de montage de composants différents sur un même produit final, il peut être difficile d'implanter plusieurs dispositifs d'alimentation sur une même machine, étant donné que ces dispositifs d'alimentation par vibration sont réalisés de façon spécifique à chaque composant et sont par ailleurs relativement encombrants.

En outre, dans le cas d'alimentation de composants munis d'éléments électroniques, tels que des étiquettes radio-fréquence, l'utilisation de tels bols vibrants est à proscrire, car ils pourraient endommager ces éléments du fait de la présence d'ondes produites par le générateur du bol et du fait des vibrations émises par un tel dispositif.

Un autre critère à prendre en compte est l'encombrement final du moyen de production qui devra être le plus compact possible et apte à respecter les règles d'ergonomie lors de la conception des moyens de fabrication.

Il est à noter également que les dispositifs d'alimentation par bol vibrant devront eux-mêmes être alimentés par une trémie de type vibrante si l'on souhaite réduire le fréquentiel de remplissage de ces dispositifs, la capacité de stockage des bols vibrants étant limitée du fait de leur conception.

On connaît également des applications robotisées pour le montage de composants. De telles applications présentent plusieurs inconvénients : leur conception nécessite un temps relativement important pour la mise en place des composants sur les pièces à assembler; les équipements et les périphériques sont généralement encombrants ; en outre, leur mise en oeuvre et leur exploitation nécessitent un personnel qualifié. Le prix de revient de ces applications est par conséquent élevé.

La présente invention a pour but de pallier les inconvénients existants sur les dispositifs de distribution actuels. L'invention permettra notamment d'extraire des composants tels que définis précédemment, d'un contenant où ces derniers sont stockés en vrac, afin de les distribuer successivement et individuellement à un endroit localisé sur un poste de travail de la chaîne de montage, les composants pouvant alors être saisis par un opérateur, un outil ou par un bras manipulateur en vue de réaliser l'assemblage de pièces constituant le produit à monter.

L'invention présente pour avantage de réduire de façon significative les temps d'études et de conception des mécanismes et des automatismes nécessaires pour la réalisation de la chaîne de montage. En outre elle permet de réaliser son agencement ponctuellement sur les postes de travail, en tenant compte de l'agencement du poste, ce qui évite les modifications importantes de la chaîne de montage.

Le dispositif de distribution de composants, selon l'invention, est notamment destiné à l'assemblage de pièces au moyen desdits composants. Ces composants sont munis d'une tête et d'un axe formant un épaulement circulaire ou une gorge circulaire. Le dispositif de distribution comprend au moins un magasin principal, une plaque d'extraction, des moyens d'actionnement de la plaque et un système de stockage provisoire des composants extraits.

Le magasin principal permet le stockage en vrac desdits composants. Ce magasin s'étend verticalement et présente au moins un plan vertical. De préférence, ce magasin comprend une section carrée ou rectangulaire définissant quatre plans verticaux sur chacune des faces verticales dudit magasin.

La plaque d'extraction de composants est agencée parallèlement au plan vertical ; cette plaque comprend à son extrémité supérieure une arête inclinée par rapport à l'horizontale. Cette arête est agencée pour prendre appui sur l'épaulement ou dans la gorge de composants situés dans le magasin. En outre, sa position inclinée permet au composant de descendre au moins par gravité selon le sens d'inclinaison, en direction de l'extrémité inférieure de ladite arête.

Les moyens d'actionnement sont agencés pour animer la plaque d'un mouvement vertical alternatif de bas en haut, et inversement. Ainsi, les composants dont l'épaulement ou la gorge est positionné en appui sur l'arête, sont dégagés vers le haut, au dessus des composants disposés en vrac dans le magasin.

Le système de stockage provisoire des composants comprend une partie amont, laquelle est agencée pour correspondre avec une extrémité inférieure de l'arête inclinée lorsque la plaque se situe en position haute, et pour permettre le transfert sur ledit système de stockage, de composants disposés sur l'arête de la plaque dans cette position haute. Par ailleurs, le système est muni de moyens de transfert agencés pour acheminer successivement les composants depuis la partie amont vers une partie aval prévue pour l'extraction successive des composants hors du dispositif, cette extraction étant réalisée notamment au moyen d'un outil, voire manuellement par un opérateur.

Un tel système de stockage provisoire permet de compenser les fluctuations d'extraction des composants par la plaque d'extraction, ce qui garantit une utilisation constante de l'installation et évite les problèmes d'approvisionnement en composants sur le poste de travail.

De manière préférentielle, le plan vertical est constitué par l'une des parois verticales du magasin. En outre, la plaque est espacée de la paroi verticale d'une distance agencée pour permettre le positionnement du composant en sorte que l'épaulement ou la gorge sur ledit composant soit disposé en vis-à-vis de l'arête sur ladite plaque. On garantit ainsi un seul positionnement possible du composant lorsqu'il est emporté et dégagé vers le haut par la plaque.

Le dispositif de distribution selon l'invention comprend des premiers moyens de poussée sur les composants disposés sur l'arête. Ces premiers moyens de poussée sont agencés pour garantir le déplacement des composants disposés sur l'arête vers son extrémité inférieure, puis le transfert éventuel d'au moins un composant sur la partie amont du système de stockage provisoire, avant la descente de la plaque dans le magasin. De manière préférentielle, ces premiers moyens de poussée sont constitués d'un souffleur ou d'une buse de soufflage disposé au-dessus de la plaque en position haute et soufflant en direction de la partie amont du système de stockage provisoire. On pourra prévoir d'autres moyens de poussée du type mécanique, tel qu'un vérin.

Les moyens de transfert du système de stockage provisoire se composent au moins de deux rails et de seconds moyens de poussée sur les composants stockés provisoirement

Le premier rail de stockage est agencé pour guider et maintenir les composants lors de leur transfert depuis l'arête de plaque. Ce rail est disposé de manière attenante à l'extrémité inférieure de l'arête, en position haute de la plaque, et suivant une trajectoire inclinée correspondant plus ou moins à l'inclinaison de ladite arête. Ce rail constitue la partie amont du système de stockage provisoire.

Le second rail, dit rail de stockage tampon, permet l'accumulation provisoire des composants engagés sur le premier rail. Ce second rail est agencé verticalement, de préférence le long du bord latéral du plan vertical, et constitue le prolongement du premier rail, en assurant un changement de direction suivant la hauteur du magasin principal.

En outre, les seconds moyens de poussée sont agencés pour réaliser le transfert d'un composant à la fois, du premier rail sur le second rail. Cette conception permet d'incrémenter successivement le stockage provisoire des composants emmagasinés en vue de les acheminer vers la partie aval du système de stockage.

De manière préférentielle, le second rail est agencé verticalement vers le haut, et les moyens de poussée sont constitués par un pousseur vertical. Les moyens de transfert comprennent en outre au moins un dispositif anti-retour permettant de maintenir le composant emmagasiné sur le second rail une fois le transfert réalisé depuis le premier rail. Ce dispositif anti-retour permet avantageusement l'incrémentation des composants.

Par ailleurs, ce pousseur vertical a de préférence une course suffisamment longue pour permettre le dégagement du composant le plus en aval sur le second rail, jusque l'extrémité supérieure dudit second rail où il est maintenu en position au moyen d'un second dispositif anti-retour qui peut être différent du premier.

Selon un mode de conception, le pousseur vertical est constitué d'un vérin agencé verticalement. Le vérin comprend un piston, dont l'extrémité prend appui sur un composant disposé en bout du premier rail, attenant au second rail, pour le transfert de ce composant sur le second rail. La course du piston assure en outre le transfert du composant au-delà du dispositif anti-retour, de préférence jusque l'extrémité supérieure du second rail dans le cas où la zone de stockage provisoire est vide. On pourra également prévoir un élément de poussée, tel qu'une tige, rapporté ou assujetti à l'extrémité du piston, la tige prenant appui sur le composant.

Selon une variante de conception, le pousseur vertical est constitué par une pièce de forme longitudinale, par exemple une tige, cette pièce étant agencée verticalement sous le second rail, pour prendre appui sur un composant disposé en bout du premier rail, et pour le transférer sur le second rail, au-delà du dispositif anti-retour. Par ailleurs, cette pièce est activée par les moyens d'actionnement de la plaque. Cette conception permet de s'affranchir d'un actionneur supplémentaire, et contribue donc à la simplification du dispositif de distribution. En outre, selon cette variante, on pourra prévoir un ressort de compensation sur la pièce, de manière à permettre la course de la plaque d'extraction jusqu'en limite supérieure même lorsque le second rail de stockage provisoire est rempli de composants, et ainsi permettre tout de même le transfert d'un composant de l'arête de plaque vers le premier rail, dans la mesure où celui-ci n'est pas encore rempli.

Le dispositif de distribution selon l'invention comprend un système de régulation de l'acheminement des composants du premier rail de stockage vers le second rail de stockage tampon. Ce système de régulation est agencé pour obturer au moins partiellement le passage entre ledit premier rail de stockage et ledit second rail de stockage tampon lorsque des composants sont en attente d'extraction en partie aval du système de stockage provisoire. Bien entendu l'obturation entre le premier rail de stockage et le second rail de stockage tampon peut être totale, selon le mode de conception envisagé.

Selon un mode préférentiel de conception, le système de régulation de l'acheminement des composants du premier rail de stockage vers le second rail stockage tampon est constitué par un dispositif anti-retour. Ce dispositif anti-retour comprend notamment une pièce de blocage, cette pièce de blocage étant montée pivotante, de préférence vis-à-vis du second rail de stockage tampon. Ainsi, lors du passage d'un composant sur le second rail de stockage tampon, pour son acheminement vers la partie aval du système de stockage provisoire, cette pièce de blocage pivote d'une position engagée vers une position dégagée pour laisser passer le composant. En outre, le dispositif anti-retour comprend un ressort de rappel permettant de ramener la pièce de blocage vers sa position engagée. Cette pièce de blocage comprend une portion supérieure, une portion intermédiaire et une portion inférieure. La portion supérieure forme une butée anti-retour sur un composant engagé sur le second rail et ayant passé ladite pièce de blocage, laquelle étant rappelée dans sa position engagée. La portion intermédiaire comprend des moyens de maintien d'un composant introduit sur le second rail de stockage tampon tandis qu'un composant est déjà en attente en partie aval du système de stockage, ce qui signifie que des composants, ayant passés ladite pièce de blocage, sont déjà en attente sur le second rail de stockage tampon. La portion inférieure est agencée soit pour obturer au moins partiellement, voire totalement selon sa conception, le passage du premier rail de stockage au second rail de stockage tampon, tant qu'un composant reste maintenu par la portion intermédiaire soit, au contraire, pour libérer le passage du premier rail de stockage au second rail de stockage tampon lorsqu'aucun composant n'est maintenu par ladite portion intermédiaire, ce qui signifie qu'aucun composant n'est en attente dans la partie aval du système de stockage et que par conséquent les composants peuvent franchir ladite pièce de blocage.

Selon la conception du premier rail de stockage et la conception de la portion inférieure de la pièce de blocage qui permet soit une obturation partielle soit une obturation totale du passage entre le premier rail de stockage et le second rail de stockage tampon, on pourra prévoir que le composant acheminé depuis la plaque d'extraction sur le premier rail de stockage, ledit composant se trouvant alors en partie amont du système stockage provisoire, reste soit en position d'attente intermédiaire jusqu'à ce que le composant disposé en partie aval du système de stockage provisoire soit extrait, soit est rejeté dans le magasin principal.

On assure ainsi une parfaite régulation de l'acheminement des composants à l'intérieur du système de stockage provisoire. Cela a pour avantage d'éviter en outre tout risque de blocage de composants dans la zone de passage entre le premier rail de stockage et le second rail de stockage tampon.

De manière préférentielle, les moyens de transfert comprennent également au moins un troisième rail attenant à l'extrémité supérieure du second rail. Ce troisième rail est agencé pour assurer le transfert des composants de l'intérieur vers l'extérieur du magasin. Ce troisième rail peut toutefois être également prolongé par un quatrième rail agencé verticalement vers le bas à l'extérieur de la paroi du magasin principal, l'extrémité inférieure duquel constituant alors la partie aval du système de stockage provisoire.

Le dispositif de distribution comprend des moyens de brassage des composants disposés dans le magasin principal. Ces moyens de brassage sont agencés pour remuer les composants et modifier leur position dans le magasin. Ces moyens de brassage sont, par exemple, constitués par un élément de support. Cet élément de support est disposé dans le fond du magasin et assujetti à la plaque ; il peut être souple ou constitué de plusieurs plaques articulées entre elles et avec la plaque verticale. Lors des déplacements verticaux de la plaque, l'élément support est alors entraîné par ladite plaque, ce qui permet de l'incliner et de le soulever au moins partiellement par rapport au fond du magasin, et ainsi assurer le brassage des composants disposés dans ledit magasin. On évite ainsi que les composants en vrac ne stagnent dans le magasin, ce qui augmente la probabilité de dégager au moins un composant qui se positionne sur l'arête de la plaque verticale, laquelle oscille de bas en haut, et inversement.

D'autres moyens de brassage peuvent être envisagés, comme par exemple un système de soufflage disposé dans le fond du magasin, des tiges verticales traversant le fond du magasin et étant actionnées verticalement et simultanément à la plaque verticale, voire encore une simple plaque additionnelle d'épaisseur plus importante que la plaque principale sur laquelle elle est rapportée.

De manière préférentielle, les moyens d'actionnement de la plaque sont constitués par un vérin pneumatique. L'utilisation du pneumatique présente pour avantage de parer les aléas de blocage du vérin dû au blocage des composants dans le magasin principal. Ainsi, en cas de blocage, le vérin stoppe sa course jusqu'au cycle suivant où il redescend, ce qui permet un mouvement des composants dans le magasin et ainsi le déblocage.

Le dispositif de distribution comprend un magasin secondaire, lequel est raccordé au niveau d'une ouverture agencée de préférence en partie supérieure, sur l'une des parois verticales du magasin principal, autre que la paroi constituant le plan vertical. En outre, le dispositif comprend une trappe de fermeture de l'ouverture et des moyens de commande de la trappe pour effectuer le remplissage du magasin principal alimenté depuis le magasin secondaire lorsque ce premier a atteint un niveau minimum.

On peut en outre prévoir plusieurs magasins secondaires disposés en cascade, avec par exemple un agencement à la verticale, cette cascade permettant de réduire le volume et surtout la hauteur du magasin principal, dans le but de réduire la course de la plaque d'extraction des composants et donc celle de l'actionneur.

De manière préférentielle, la trappe est montée coulissante verticalement par rapport à la paroi verticale du magasin, pour assurer son déplacement vertical par rapport à l'ouverture. On pourrait toutefois prévoir une trappe montée pivotante par rapport à l'ouverture, dans le plan de la paroi verticale du magasin principal, muni de l'ouverture.

Selon un mode préférentiel, les moyens de commande de la trappe se composent d'une patte horizontale assujettie à la face interne de la trappe montée coulissante, et s'étendant au dessus des composants disposés dans le magasin principal.

De même, selon le mode préférentiel, ces moyens de commande se composent d'un système d'actionnement vertical, constitué par un doigt disposé sur la plaque d'extraction et prenant appui soit sur la patte horizontale, soit sur une autre patte constituant une butée et disposée sur la trappe en dessous du magasin. Ce système est agencé pour déplacer la trappe, de manière à maintenir la patte en appui au dessus des composants, ce qui permet d'obturer l'ouverture tant que le magasin principal comprend de tels composants, tandis que la trappe passe en dessous de l'ouverture naturellement lorsque le magasin atteint un seuil minimal en composants, ce qui permet de transférer des composants du magasin secondaire vers le magasin principal. En outre, ces moyens de commande comprennent un capteur de position qui détecte que le magasin a atteint un seuil limite selon lequel le capteur active, selon ce mode préférentiel, un signal d'alarme pour prévenir que le magasin secondaire est également vide.

Selon une variante de conception, le système d'actionnement vertical est constitué par un vérin vertical. Au contraire, selon la variante de conception, le vérin permet de maintenir la trappe devant l'ouverture puis de forcer le dégagement de la trappe en dessous voire au-dessus de l'ouverture lorsque le seuil est minimal et ainsi la libérer. Selon cette variante de conception, la présence d'un capteur active le vérin pour actionner la trappe et permettre au magasin secondaire de libérer des composants qui remplissent alors le magasin principal.

D'autres caractéristiques et avantages de la présente invention pourront apparaître à la lecture suivante d'un mode préférentiel de conception du dispositif de distribution notamment conçu pour des agrafes plastiques, lequel est illustré par des figures, parmi lesquelles :
- la figure 1 schématise un exemple de composant du type agrafe distribué au moyen du dispositif selon l'invention ;
- la figure 2 schématise partiellement le dispositif de distribution permettant de mettre en évidence l'agencement des éléments constitutifs de celui-ci ;
- la figure 3 schématise un magasin secondaire, attenant au magasin principal et raccordé sur celui-ci au niveau d'une ouverture, ainsi qu'une trappe de fermeture de cette ouverture ;
- les figures 4 et 5 schématisent la plaque d'extraction en phase de dégagement d'un composant par rapport aux autres composants stockés en vrac dans le magasin principal ;
- les figures 6 et 7 schématisent les moyens de transfert des composants sur le système de stockage provisoire ;
- la figure 8 schématise un dispositif anti-retour ;
- la figure 9 schématise un troisième et quatrième rail constitutif d'une partie des moyens de transfert sur le système de stockage provisoire, selon une variante ;
- les figures 10 et 11 montrent un système de régulation de l'acheminement des composants à l'intérieur du système de stockage provisoire mettant en évidence la pièce de blocage respectivement en position engagée et en position dégagée ;
- la figure 12 montre une variante de conception de la pièce de blocage du système de régulation.

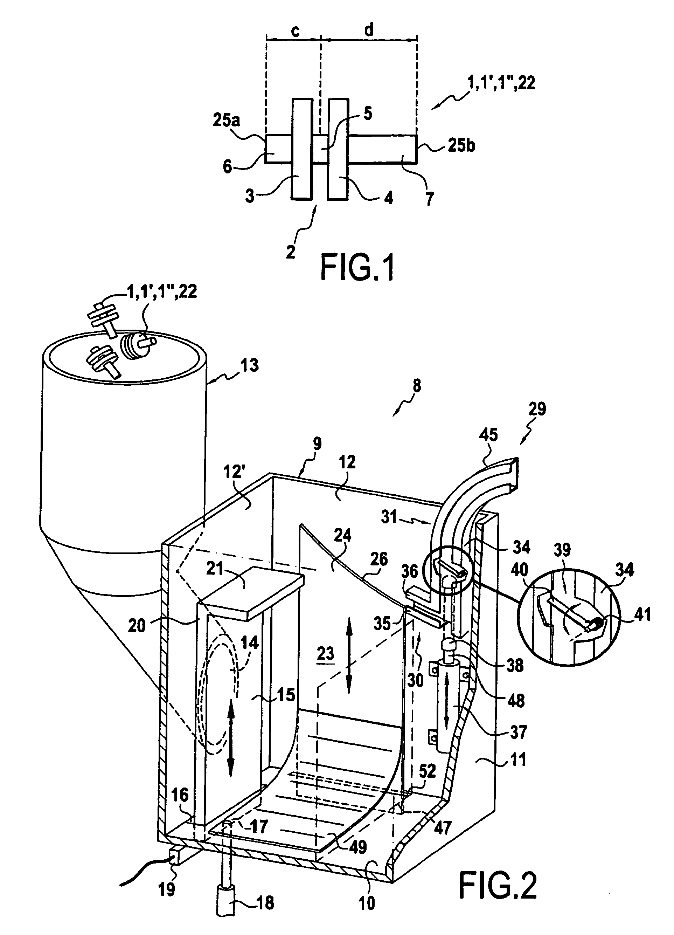

La description suivante est réalisée en prenant pour exemple des composants 1 du type agrafe, tel qu'illustré sur la figure 1. Une telle agrafe 1 comprend notamment une gorge circulaire 2 constituée par deux flasques 3,4, séparés par une portion axiale 5, ces flasques pouvant être de formes et de dimensions différentes, selon les pièces à assembler. Des éléments techniques additionnels 6,7, sous la forme d'un prolongement axial, relatifs à la fonction assurée par le composant, peuvent être disposés de part et d'autre des flasques 3,4. Les encombrements des éléments techniques 6,7 sont caractérisés respectivement par les côtes « c » et « d » sur la figure 1.

Ces composants peuvent également consister en une vis. Dans ce cas, l'élément technique 6 est supprimé, la côte « c » étant réduite à son minimum, à savoir l'épaisseur du flasque 3 constitué par la tête de vis ; tandis que le flasque 4 est réduit à son minimum de manière à être confondu avec la portion axiale 5 et l'élément technique 7, également confondu avec ladite portion axiale 5, ces éléments étant constitués par la partie filetée axiale de la vis dont la longueur définie la côte « d », la tête de vis et la partie filetée formant un épaulement circulaire. D'autres composants sont envisageables, tels que des clous.

Cette gorge 2, voire cet épaulement, assure la prise du composant 1 pendant les phases d'extraction et de transfert, tel que cela sera repris plus en détail ci-après.

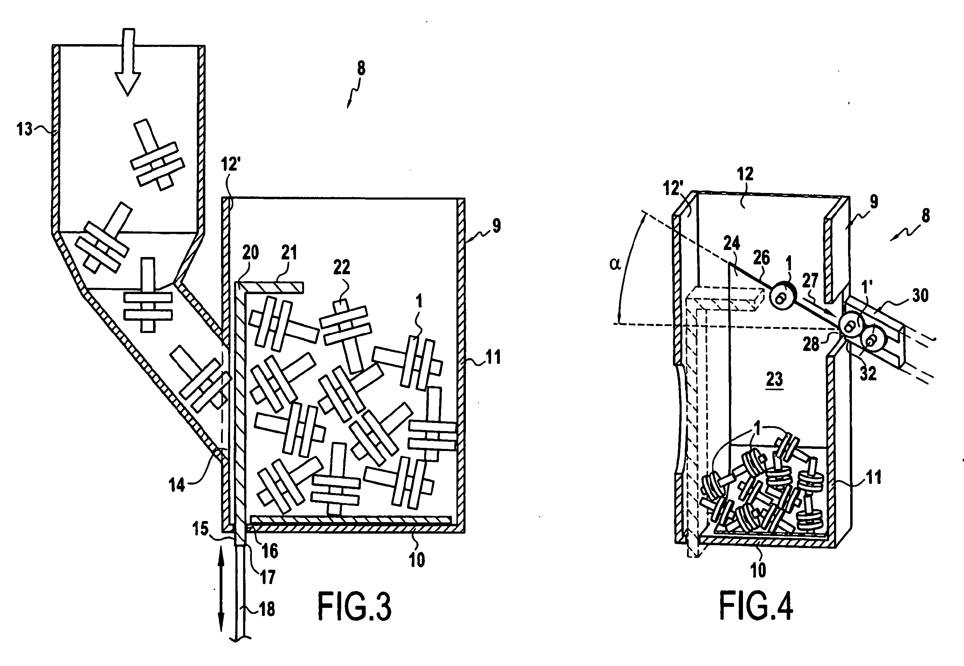

Selon l'invention, le dispositif de distribution 8, illustré en figure 2, comprend un magasin principal 9 dans lequel sont disposés en vrac les composants 1, tel qu'illustré aux figures 3 à 5. Ce magasin 9 comprend un fond 10 et une paroi 11 qui s'étend verticalement. Cette paroi 11 présente de préférence une section rectangulaire ou carrée, de manière à ce que l'une de ses faces latérales constitue un plan vertical 12. Un tel agencement vertical du magasin 9 permet de limiter son encombrement et de l'adapter facilement et directement sur le poste de travail. Par ailleurs, une telle section rectangulaire ou carrée permet de modifier facilement l'agencement des éléments du dispositif pour adapter au mieux son implantation sur le poste de travail.

De manière préférentielle, le dispositif de distribution comprend un magasin secondaire 13, illustré aux figures 2 et 3, dans lequel sont stockés provisoirement les composants 1 ; cette conception a pour avantage de disposer d'une plus grande souplesse de réapprovisionnement en composants dans le magasin principal 9, sur le poste de travail. Selon cette conception, une ouverture 14 est pratiquée sur une seconde paroi verticale 12' constituée par l'une des autres faces que celle constituant le plan vertical 12. En outre, le magasin secondaire 13 est raccordé sur cette ouverture 14.

Une trappe 15 de fermeture est agencée sur le côté interne de la paroi 11, au niveau de l'ouverture 14, pour séparer physiquement le magasin principal 9 du magasin secondaire 13. De manière préférentielle, cette trappe 15 est montée coulissante verticalement par rapport à la paroi, le fond 10 du magasin comprenant un orifice 16 pour le passage de l'extrémité inférieure 17 de la trappe 15.

Selon un mode de conception, cette extrémité 17 est reliée à des moyens de commande qui permettent d'actionner verticalement la trappe pour libérer l'ouverture 14 et effectuer le remplissage en composants du magasin principal 9, contenus préalablement dans le magasin secondaire 13, et pour obturer l'ouverture 14 une fois le remplissage du magasin principal 9 réalisé. Par exemple, ces moyens de commande de la trappe 15, illustrés en figures 2 et 3, sont constitués par un actionneur du type vérin 18, assujetti à la trappe 15, au niveau de son extrémité inférieure 17, ce vérin 18 actionnant verticalement vers le haut ladite trappe 15 pour la soulever et la dégager de l'ouverture 14.

De même, ces moyens de commande comprennent un capteur 19 qui contrôle, par exemple, la position de l'extrémité inférieure 17 de la trappe 15, voire celle de son extrémité supérieure 20. Les moyens de commande comprennent également une patte 21 s'étendant horizontalement ou avec une légère inclinaison au niveau de cette extrémité supérieure 20, du côté de la face interne de la trappe 15, cette patte 21 prenant appui sur les composants 22 disposés en partie supérieure dans le magasin principal 9. La patte 21 conserve un appui sur les composants 22, ce qui permet la descente de la trappe 15 au fur et à mesure que le magasin principal 9 se vide de composants. Une fois que le niveau a baissé suffisamment, le capteur 19 détecte la position de la trappe 15, le vérin 18 soulevant alors celle-ci pour libérer l'ouverture 14 et introduire d'autres composants qui étaient stockés dans le magasin secondaire 13. Lorsque le vérin 18 est désactivé, la patte 21 reprend alors appui sur les composants 22.

D'autres actionneurs sont envisageables en remplacement du vérin 18, comme par exemple un dispositif à crémaillère. De même, d'autres positions du capteur 19 peuvent être envisagées.

Selon une variante de conception, un élément de butée est solidaire d'une plaque d'extraction 23 animée d'un mouvement alternatif, de bas en haut; cette plaque d'extraction 23 sera décrite plus en détail ci-après. Cet élément de butée prend de préférence appui sur la patte horizontale 21 de la trappe 15, cette dernière obturant l'ouverture 14 entre le magasin principal 9 et le magasin secondaire 13. Les mouvements de la plaque d'extraction 23 permettent donc d'actionner la trappe 14 verticalement, ladite trappe 15, en descendant, étant maintenue en position d'obturation de l'ouverture 14 du fait que la patte 21 horizontale reste en appui sur les composants 22. Lorsque le magasin principal 9 a atteint un seuil limite et que la plaque d'extraction 23 descend en position basse, la trappe passe alors en dessous de l'ouverture 14, ce qui permet alors le remplissage dudit magasin principal 9. Puis, lors de la remontée de la plaque d'extraction 23, celle-ci entraîne alors la trappe 15 et la patte horizontale 21 repasse alors au dessus des composants 1 pour revenir ensuite en appui sur les composants 22, au dessus du tas. Selon cette conception, on prévoira de préférence une inclinaison vers le bas de la patte 21 afin de faciliter le glissement des composants 1 sur cette patte 21 lors du remplissage du magasin principal 9 puis de la remontée de la trappe 15.

L'alimentation du magasin secondaire 13 se fera indifféremment en partie haute de cette dernière, soit en direct par une ouverture supérieure, soit par tout autre moyen tel qu'une goulotte ou un magasin d'alimentation complémentaire.

Ce dispositif d'alimentation garantit un niveau stable des composants 1 dans magasin 9, ce qui garantit également un débit d'extraction régulier.

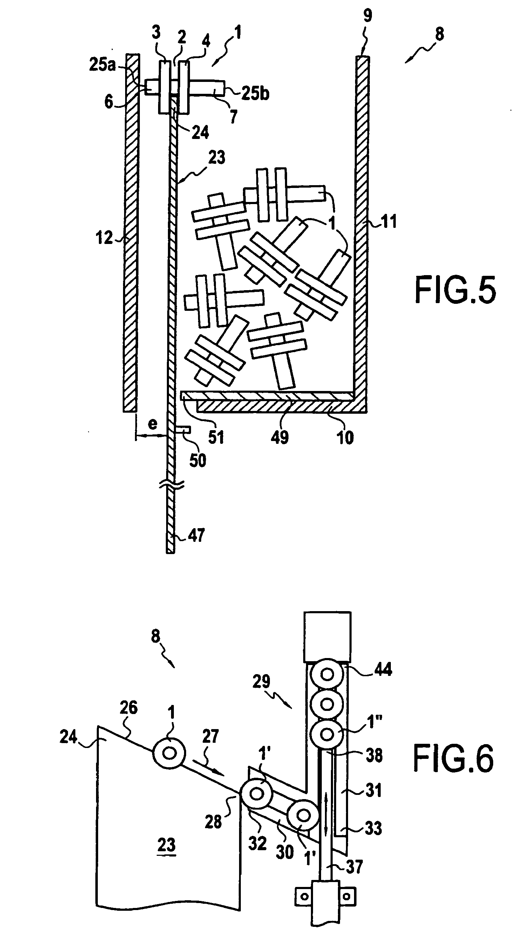

Le dispositif de distribution 8 comprend une plaque d'extraction 23, illustrée aux figures 2, 4, 5 et 6. Cette plaque d'extraction 23 est animée d'un mouvement linéaire alternatif, de bas en haut. Cette plaque 23 comprend une épaisseur inférieure à la largeur de la gorge 2 de manière à assurer son introduction entre les deux flasques 3,4 sur les composants, comme le montre la figure 5. Le mouvement linéaire alternatif, de bas en haut, de la plaque 23 permet de prélever, par sa partie supérieure 24, un nombre aléatoire de composants 1, ladite partie supérieure 24 de la plaque venant se loger dans la gorge 2.

La plaque 23 est espacée d'une distance prédéterminée « e » de la paroi 12 du magasin principal 9, tel qu'illustré en figure 5. Cette distance « e » correspond sensiblement à la distance « c » séparant l'extrémité 25a du premier élément technique 6, de la gorge 2. En outre, cette distance « e » est inférieure à la distance « d » séparant l'extrémité 25b du second élément technique 7, de ladite gorge 2. Ainsi on garantit le positionnement de la gorge 2 en vis-à-vis de la plaque 23, de même que le sens d'orientation du composant 1 soulevé par la plaque 23. Dans le cas d'une vis, cette distance « e » sera définie par l'épaisseur même de la tête de vis.

La plaque 23 comprend sur sa partie supérieure 24 une arête 26, laquelle est inclinée d'un angle α par rapport à l'horizontale, illustré en figure 4, afin de réaliser le déplacement des composants engagés sur l'arête 26, dans le sens de l'inclinaison. On peut également prévoir une forme incurvée sur l'arête 26, telle qu'illustrée en figure 2. L'inclinaison de l'arête permet de réaliser le déplacement par gravité. Toutefois, étant donné le poids faible des composants du type agrafe en matière plastique, le dispositif 8 comprend des premiers moyens de poussée sur les composants 1 dans le sens de la flèche 27 illustrée figure 4. Ces premiers moyens de poussée sont de préférence constitués par un souffleur disposé à proximité de l'extrémité inférieure 28 de l'arête 26. En outre, ces moyens de poussée vont assurer le dégagement du composant 1 disposé à l'extrémité inférieure 28 de l'arête 26 vers un système de stockage provisoire 29 des composants dégagés 1', tel qu'illustré en figure 6.

A ce titre, le système de stockage provisoire 29, illustré en figures 2, 4 et 6, comprend des moyens de transfert agencés pour acheminer successivement les composants depuis la partie amont du système de stockage vers la partie aval de celui-ci, au niveau de laquelle le composant peut être saisi par un outil sur le poste de travail. Pour cela, le système de stockage provisoire 29 se compose de deux rails 30, 31 et de seconds moyens de poussée, lesdits moyens de poussée étant agencés pour réaliser le transfert d'un composant 1' du premier rail 30 sur le second rail 31.

Le premier rail 30, dit de stockage, a son extrémité amont 32 attenante à l'extrémité inférieure 28 de l'arête 26 de la plaque, lorsque celle-ci se situe en position haute. En outre, le rail 30 comprend une inclinaison de préférence légèrement inférieure à celle de l'arête 26. Cela permet d'assurer une continuité entre l'arête 26 de la plaque 23 et le rail de stockage 30 durant le transfert du composant 1,1' tout en facilitant le dégagement du composant lors de son transfert du premier rail 30 vers le second rail 31. En outre, cela permet de guider et de maintenir le composant lors de son transfert, les flasques 3,4 restant convenablement position et passant de manière continue de la plaque 23 vers le premier rail 30.

Le second rail 31, dit de stockage tampon, a son extrémité amont 33 attenante au premier rail 30, tel qu'illustré en figure 6, ce qui permet au composant de venir en butée sur ladite extrémité amont 33. En outre, ce second rail 31 s'étend verticalement vers le haut à l'intérieur du magasin principal 9, de préférence le long de son bord latéral 34, illustré en figure 2, et il permet l'accumulation provisoire des composants 1", tel qu'illustré en figure 6.

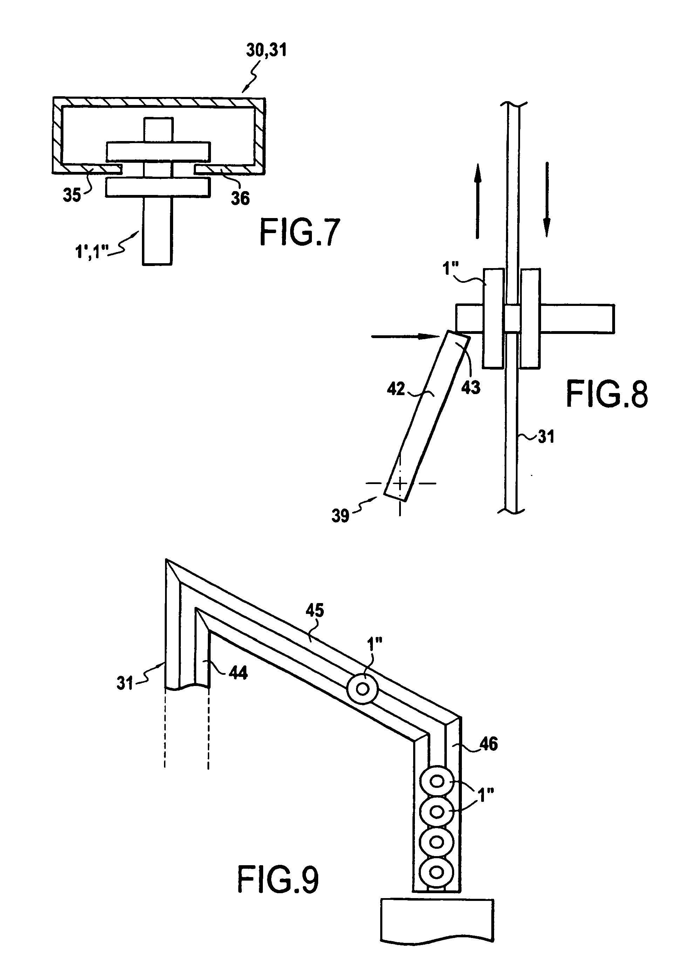

Les rails 30,31 pourront avoir une forme en U telle qu'illustrée en figure 7, munie de deux extrémités 35,36 espacées l'une de l'autre par une rainure de largeur correspondante au diamètre de la portion axiale 5, et d'épaisseur permettant l'introduction de la gorge 2 du composant 1,1" entre lesdites extrémités 35,36. On peut toutefois envisager une simple plaque munie d'une rainure, de manière similaire à celle des deux extrémités 35,36.

Les seconds moyens de poussée du système de stockage provisoires 29 sont constitués par un pousseur vertical 37, illustré en figure 6. L'actionnement du pousseur vertical 37 permet d'entraîner son extrémité 38 vers le haut, ce qui permet de pousser le composant 1' disposé dans le premier rail 30, en butée sur l'extrémité amont 33 du second rail 31, à l'intérieur dudit second rail 31. On peut toutefois prévoir une tige verticale rapportée sur l'extrémité 38, ladite tige venant en butée sur le composant lors de l'actionnement du pousseur vertical 37.

En outre, un dispositif anti-retour 39 permet le maintien du composant 1" emmagasiné sur le second rail 31, une fois celui engagé par le pousseur vertical 37. Ce dispositif anti-retour 39, illustré en figure 2, est par exemple constitué d'une pièce de blocage 40 montée pivotante et sur ressort de rappel 41. On peut toutefois envisager un dispositif anti-retour 39 du type lamelle flexible 42 dont l'extrémité 43 prend appui sur le composant 1", tel qu'illustré en figure 8.

Par ailleurs, le blocage des composants 1" dans le second rail 31 est assuré par le dispositif anti-retour 39 sur lequel prennent appui lesdits composants 1" qui reposent sur celui-ci du fait de la gravité et de l'agencement vertical dudit second rail 31 ; il en résulte que l'introduction d'un autre composant 1" permet de faire avancer progressivement lesdits composants 1" accumulés dans le second rail 31 jusqu'à atteindre l'extrémité supérieure 44 dudit second rail 31 constituant éventuellement la partie aval du système de stockage 29, où le composant le plus en aval peut être dégagé.

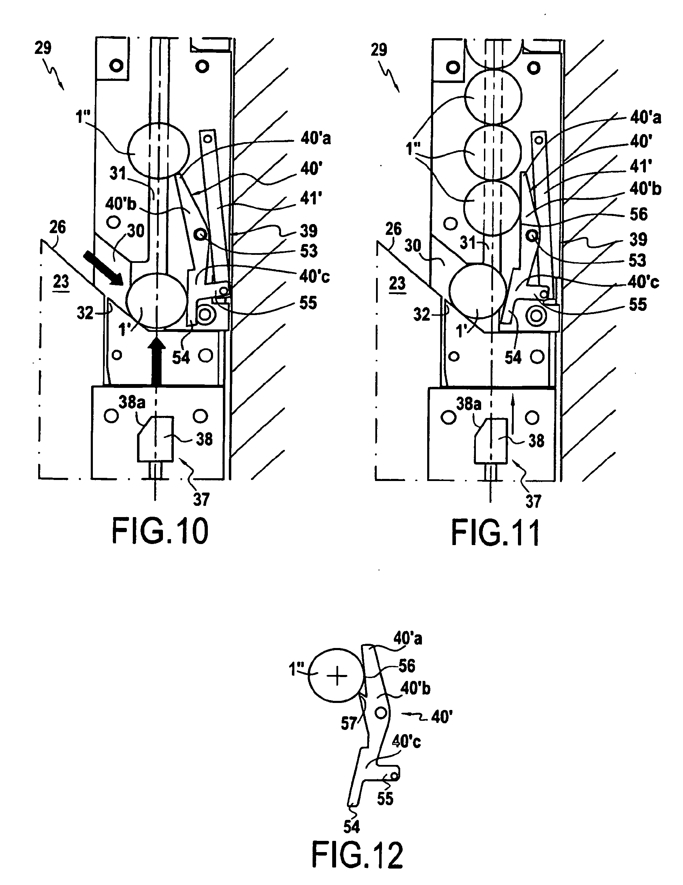

Selon une variante de conception illustrée aux figures 10 à 12, ce dispositif anti-retour 39 constitue un système de régulation d'acheminement des composants lors de leur passage du premier rail de stockage 30 vers le second rail de stockage tampon 31. Le dispositif anti-retour 39 est agencé pour obturer au moins partiellement le passage entre le premier rail 30 et le second rail 31 lorsqu'un composant 1" est en attente d'extraction en partie aval du système de stockage 29, cette partie aval pouvant consister en l'extrémité supérieure 44, dudit second rail 31, tel que cela est illustré sur la figure 11.

Le dispositif anti-retour 39 comprend pour cela une pièce de blocage 40' qui est montée pivotante par rapport au second rail 31 au moyen d'une liaison par pivot 53 ainsi, la pièce de blocage 40' peut pivoter d'une position engagée illustrée à la figure 10 selon laquelle un composant 1" est emmagasiné sur le second rail et acheminé au moyen du pousseur vertical 37 vers la partie aval du système de stockage provisoire 29, ledit composant 1" faisant pivoter la pièce de blocage 40' dans une position dégagée permettant le passage de celui-ci. Lorsque le composant 1" a passé ladite pièce de blocage, celle-ci peut alors revenir dans sa position engagée illustrée sur la figure 10. Pour cela, le dispositif anti-retour 39 comprend également un ressort de rappel 41' qui ramène la pièce de blocage 40' dans sa position engagée, selon laquelle la portion supérieure 40'a de ladite pièce de blocage 40' forme une butée anti-retour sur le composant 1" qui tend à descendre par gravité du fait de la position verticale du second rail 31.

La pièce de blocage 40' comprend également une portion intermédiaire 40'b qui comprend des moyens de maintien d'un composant 1" introduit sur le second rail tandis qu'un composant est déjà en attente en partie aval du système de stockage , signifiant que des composants 1" ayant déjà franchis la pièce de blocage 40', sont stockés provisoirement sur le second rail 31, tel qu'illustré en figure 11. Le pousseur vertical 37 tant à acheminer le composant 1" vers la partie aval du second rail de stockage 31, ce qui permet de pivoter la pièce de blocage 40' vers sa position dégagée telle qu'illustrée en figure 11. Ce composant 1" reste toutefois bloqué du fait de la présence d'autres composants 1" en attente dans la partie aval du second rail 31, ledit composant 1" ne pouvant alors pas franchir la pièce de blocage 40'. Les moyens de maintien de la portion intermédiaire 40'b permettent alors de maintenir ce composant 1" qui tend à redescendre par gravité, ce qui, d'une part maintient celui-ci en position et, d'autre part, maintient la pièce de blocage dans la position dégagé telle qu'illustrée en figure 11, alors que le pousseur vertical 37 redescend pour la prise du composant suivant.

Afin d'éviter que le pousseur vertical 37 ne prenne un composant supplémentaire alors que la zone de stockage tampon en partie aval du second rail 31 est déjà remplie, la pièce de blocage 40' comprend une portion inférieure 40'c qui est agencée pour obturer au moins partiellement le passage du premier rail 30 au second rail de stockage 31. Pour cela, la portion inférieure 40'c de la pièce de blocage 40' comprend la forme d'une talonnette arrière 54 qui, lorsque ladite pièce de blocage se trouve dans la position dégagée, permet d'obturer ledit passage. Sur la figure 11, on constate que la talonnette arrière sur la portion inférieure 40'c obture partiellement le passage entre le premier rail 30 et le second rail 31. On peut toutefois prévoir une obturation totale selon la forme de la talonnette qui, au contraire, lorsque la pièce de blocage se trouve dans la position engagée, illustrée en figure 10, permettra un positionnement convenable du composant 1' -pour que celui-ci puisse être acheminé sur le second rail 31 sous l'action du pousseur vertical 37.

La pièce de blocage 40' comprend dans sa portion inférieure 40'c une patte 55 s'étendant vers l'avant sur laquelle est fixée l'extrémité du ressort de rappel 41', cette patte 55 permettant de constituer un bras de levier pour le pivotement de la pièce de blocage 40' dans sa position de rappel engagée.

Les moyens de maintien sur la portion intermédiaire 40'b de la pièce de blocage 40' sont, selon un mode de réalisation, notamment lorsque les composants sont en plastique, c'est-à-dire léger, constitués par la simple force de rappel du ressort 41' qui permet à la face d'appui 56 de la portion intermédiaire 40'b d'exercer un pincement sur le composant 1" tel qu'illustré sur la figure 11. Selon une variante illustrée sur la figure 12, on peut prévoir un harpon 57 complémentaire qui assurera le maintien du composant 1" en formant butée contre celui-ci.

Sur le mode illustré sur les figures 10 à 12 selon lequel la talonnette arrière 54 sur la portion inférieure 40'c de la pièce de blocage 40' assure une obturation partielle entre le premier rail 30 et le second rail 31, on prévoit au niveau de l'extrémité 38 du pousseur vertical 37 une portion chanfreinée 38a qui permet de refouler le composant 1' maintenu bloqué par la talonnette arrière 54 au niveau du passage entre le premier rail 30 et le second rail 31, ce qui, en fonction de la longueur du premier rail de stockage 30 permet soit de refouler le composant 1' dans une position d'attente jusqu'à la libération de la place en partie aval du second rail 31 qui permet au pousseur vertical 37 de pousser le composant 1" maintenu par la portion intermédiaire 40'b, lequel franchit alors la pièce de blocage 40', ce qui autorise le retour de la pièce de blocage dans sa position engagée, soit permet de refouler le composant 1' dans le magasin principal 9 où il sera éventuellement repris par la plaque d'extraction 23. On évite ainsi les risques de blocage de composants dans la zone de passage entre le premier rail 30 et le second rail 31.

On peut bien entendu prévoir un système de régulation de l'acheminement des composants du premier rail de stockage 30 vers le second rail de stockage tampon 31, indépendamment du dispositif anti-retour 39, sans sortir du cadre de l'invention.

De manière préférentielle, la course de l'extrémité 38 du pousseur vertical 37 ou celle de la tige verticale rapportée, permettra d'atteindre l'extrémité supérieure 44 du second rail 31 de manière à assurer le transfert d'un composant, jusqu'en limite aval dudit second rail 31, ce composant 1" étant notamment celui qui est le plus en aval lorsque des composants 1" sont déjà stockés provisoirement dans ledit second rail 31, voire le composant qui est transféré lorsque ledit second rail 31 est vide. On pourra en outre prévoir des moyens de maintien du composant amené au niveau de l'extrémité aval du second rail, tel qu'un dispositif anti-retour éventuellement semblable au dispositif anti-retour 39.

De manière préférentielle, les moyens de transfert comprennent un troisième rail 45, voire également un quatrième rail 46, lesquels sont illustrés en figure 9. Le troisième rail 45 est attenant à l'extrémité supérieure 44 du second rail 31 afin de le prolonger de manière continue en changeant la trajectoire d'acheminement des composants, et il s'étend avec une légère inclinaison vers le bas par rapport à l'horizontale, pour faciliter la descente par gravité, depuis l'intérieur vers l'extérieur du magasin principal 9. Celui-ci permet donc d'évacuer les composants hors du magasin 9 pour que ceux-ci soient saisis par un opérateur, un outil de pose ou un bras manipulateur sur le poste de travail. En outre, il constitue également une zone de stockage tampon complémentaire. Par ailleurs, l'ajout d'un quatrième rail 46, agencé verticalement vers le bas, permet d'acheminer lesdits composants pour leur extraction à un niveau inférieur, en fonction de l'agencement du poste de travail.

De manière préférentielle, un rayon de courbure, tel qu'illustré en figure 2, est prévu entre l'extrémité supérieure 44 du second rail et le troisième rail 45. Il en est de même entre le troisième rail 45 et le quatrième rail 46. Ce rayon de courbure permet d'effectuer directement le transfert du composant du second rail 31 vers le troisième 45 par la simple poussée du composant au moyen de pousseur vertical 37. Il en est de même du troisième rail 45 vers le quatrième rail lorsque ledit troisième rail 45 est rempli. On pourra toutefois prévoir un rayon de courbure différent entre le second rail 31 et le troisième rail 45 afin de modifier l'orientation des composants en sortie.

Des moyens d'actionnement de la plaque 23 permettent d'animer celle-ci du mouvement alternatif de bas en haut, et inversement. Ceux-ci sont constitués par un actionneur assujetti à la plaque 23, notamment au niveau de son extrémité inférieure 47. La conception de cet actionneur est agencée pour arrêter la course de la plaque 23 à tout endroit, selon le blocage éventuel de cette plaque par des composants 1 contenus dans le magasin principal 9.

De manière préférentielle, cet actionneur est constitué par au moins un vérin pneumatique, particulièrement bien adapté à cette application. Ces vérins seront pilotés par une fonction commande pouvant, de façon simple, être une base de temps, laquelle ne nécessite aucune mise oeuvre de capteurs de fin de course. L'utilisation de vérins pneumatiques présente pour avantage d'autoriser tout blocage des mouvements de la plaque 23, sans détériorer les composants 1 lors dudit blocage. La base de temps inverse en effet le mouvement après quelques secondes, le mouvement des composants 1 à l'intérieur du magasin permettant au système de reprendre un fonctionnement normal lors du cycle suivant. Ainsi, l'arrêt des mécanismes peut se faire à tout instant et ne requiert aucun automatisme de contrôle. Le redémarrage se fera également dans n'importe quelle position.

La plaque 23, destinée à extraire les composants, est animée d'un mouvement linéaire alternatif dans un plan parallèle au plan vertical 12. Ce mouvement alternatif est assuré par un guidage linéaire. Pour cela, un orifice 52 est pratiqué dans le fond 10 du magasin principal 9, lequel permet le passage de la plaque 23. En outre, la plaque 23 est par exemple guidée en glissière suivant sa trajectoire verticale, celle-ci se déplaçant entre deux positions extrêmes basse et haute. Lors du déplacement de la plaque 23 de la position basse vers la position haute, l'arrête 26 est susceptible de se loger dans la gorge circulaire 2 d'un voire de plusieurs composants 1 contenus dans le magasin 9, ce qui permet de l'extraire. Lorsque la plaque 23 est en position haute, un temps d'arrêt suffisant permet au composant 1 de rouler le long de l'arête 26 et de rejoindre l'extrémité inférieure 28.

La plaque 23 est alternativement, soit en position haute, au contact des composants 1, soit en position basse, cette position basse permettant aux composants 1 de remplir l'espace entre le plan vertical 12 et la plaque 23, au-dessus de l'arête 26. L'accroche d'un composant 1 sur la partie supérieure 24 de la plaque 23 lors de sa remontée, n'est pas systématique. La fréquence d'accrochage des composants dépendra en particulier du niveau des composants 1,22 contenus dans le magasin 9 et de l'orientation de ces derniers. Ainsi, des composants 1 seront extraits est placés de façon fréquentielle sur le premier rail de stockage 30, lequel peut de préférence contenir plusieurs composants 1'. Le système de stockage provisoire 29 permet en particulier de compenser l'effet fréquentiel d'extraction des composants 1. Pour cela, le distributeur 8 est dimensionné de façon à ce que le débit moyen d'extraction des composants 1 soit supérieur au débit demandé par l'application sur le poste de travail.

Il faut également noter que lorsque le premier rail 30 est plein, tout composant 1 extrait par la plaque 23 retombera dans le magasin 9, et ce jusqu'à libération d'une place sur ledit rail de stockage 30.

Selon un mode de réalisation, le pousseur vertical 37 est constitué d'un vérin pneumatique agencé verticalement, tel qu'illustré sur la figure 2. L'extrémité du piston 48 constitue donc l'extrémité 38 dudit actionneur, celle-ci prenant appui sur un composant 1' disposé en bout du premier rail 30. La course du piston 48 sera dimensionnée de manière à assurer le transfert du composant 1' jusqu'au-delà du dispositif anti-retour 39 et de préférence jusque l'extrémité supérieure 44 du second rail 31, laquelle peut comprendre un second dispositif anti-retour de conception similaire ou différente à celle du dispositif anti-retour 39.

Selon une variante de réalisation, le pousseur vertical 37 est constitué par une pièce de forme longitudinale du type tige, telle qu'illustrée en figure 6, celle-ci étant agencée verticalement sous le second rail pour prendre appui sur le composant 1' disposé en bout du premier rail, et le transférer sur le second rail, au-delà du dispositif anti-retour 39. Cette pièce est activée par les moyens d'actionnement de la plaque 23, à savoir le vérin pneumatique. Cette conception présente pour avantage d'utiliser un seul vérin pour la commande de la plaque 23 et le pousseur vertical 37, mais nécessite toutefois de dimensionner convenablement la longueur de la tige en fonction de la course de la plaque 23 actionnée par ledit vérin pneumatique.

On peut prévoir en outre, selon cette variante, une pièce ou tige composée de deux éléments entre lesquels est agencé un ressort de compensation, lequel se comprime lorsque le rail secondaire 31 est déjà complet, ce qui permet tout de même à la plaque d'extraction 23 de terminer sa course pour déposer éventuellement un composant 1 sur le premier rail 30.

Tandis que selon la première solution, l'utilisation d'un vérin pneumatique indépendant pour le pousseur vertical 37 permet de limiter sa course en fonction du nombre de composants contenus dans la zone tampon constituée par le second rail 31. En outre, le vérin pneumatique constituant le pousseur vertical 37 et le vérin pneumatique des moyens d'actionnement de la plaque 23 fonctionnent en opposition et sont pilotés par le même distributeur, ce qui d'une part limite le coût de fabrication de l'installation et, d'autre part, permet de libérer une place sur le premier rail 30 pour y disposer un composant lors de la remontée suivante de la plaque 23.

Le dispositif de distribution comprend des moyens de brassage des composants disposés dans le magasin principal 9, tel qu'illustré en figures 2 et 5. Ces moyens de brassage sont agencés pour remuer les composants 1 et modifier leur position dans le magasin 9. Ces moyens de brassage sont constitués par un élément de support 49 disposé dans le fond 10 du magasin 9. Cet élément de support 49 est par exemple assujetti à la plaque 23 par collage, tel qu'illustré en figure 2. Selon une variante illustrée en figure 5, une butée 50 est solidaire de la face interne de la plaque 23, les déplacements verticaux de la plaque 23 permettant de déplacer vers le haut cette butée 50, laquelle prend appui sur l'extrémité 51 de l'élément support 49 pour le soulever et l'incliner au moins partiellement dans le fond du magasin 9, ce qui permet de remuer les composants 1. On peut également prévoir un élément tel qu'une une plaque secondaire d'épaisseur plus importante et rapportée sur la face interne de la plaque d'extraction 23, ledit élément venant en contact avec les composant lors des vas et viens de la plaque d'extraction 23.

On peut toutefois prévoir d'autres moyens de brassage, tel qu'un souffleur agencé dans l'enceinte du magasin 9, ce qui est envisageable que lorsque les composants 1 sont des agrafes en plastique présentant une légèreté suffisante pour effectuer un tel brassage par soufflage.

Toutes les caractéristiques dimensionnelles ainsi que la fréquence des mouvements des différents mécanismes sont déterminées en fonction du temps de cycle souhaité, c'est-à-dire le temps entre chaque prélèvement de composants effectué par un opérateur, un outil ou un bras manipulateur, par exemple.

La présente invention permet la constitution d'un distributeur 8 autonome d'extraction et de transfert de composants, mise en oeuvre directement sur chaque poste. Par ailleurs, sa conception le rend très modulable, ce qui permet de l'adapter en fonction de la configuration du poste sur lequel il doit être agencé. En outre, leur compacité permet de les placer à proximité des pièces à assembler au moyen desdits composants 1.

## Revendications

1. Dispositif de distribution (8) de composants (1, 1', 1"), notamment destinés à l'assemblage de pièces au moyen desdits composants, lesdits composants étant munis dune tête et d'un axe formant un épaulement circulaire ou une gorge circulaire (2), **caractérisé en ce qu'**il comprend au moins:
- un magasin principal (9) de stockage en vrac desdits composants (1), ce magasin s'étendant verticalement et présentant au moins un plan vertical (12) ;
- une plaque d'extraction (23) de composants (1) agencée parallèlement au plan vertical (12), ladite plaque (23) comprenant à son extrémité supérieure (24) une arête (26) inclinée par rapport à l'horizontale, cette arête (26) étant agencée pour prendre appui sur l'épaulement ou dans la gorge (2) de composants (1) ;
- des moyens d'actionnement de la plaque pour animer celle-ci d'un mouvement vertical alternatif de bas en haut, et inversement, et dégager vers le haut des composants (1), dont l'épaulement ou la gorge (2) est en appui sur l'arête (26) ;
- un système de stockage provisoire (29) des composants (1,1') comprenant une partie amont (32) agencée pour correspondre avec une extrémité inférieure (28) de l'arête (26) inclinée lorsque la plaque (23) se situe en position haute et pour permettre le transfert de composants (1,1') de la plaque (23) sur ledit système de stockage (29), ledit système étant muni de moyens de transfert (30,31,37,39) agencés pour acheminer successivement les composants (1',1") depuis la partie amont (32) vers une partie aval (44) prévue pour l'extraction successive des composants (1") hors du dispositif (8).

2. Dispositif de distribution (8) selon la revendication 1, le plan vertical (12) est constitué par l'une des parois (11) du magasin (9), la plaque (23) étant espacée de la paroi d'une distance « e » agencée pour permettre le positionnement du composant (1) en sorte que l'épaulement ou la gorge (2) sur ledit composant (1) soit disposé en vis-à-vis de l'arête 26 sur ladite plaque (23).

3. Dispositif de distribution (8) selon l'une des revendications 1 ou 2, lequel comprend des premiers moyens de poussée (27) sur les composants (1) disposés sur l'arête (26) pour garantir le déplacement desdits composants (1) vers l'extrémité inférieure (28) de cette arête (26) et le transfert sur la partie amont (32) du système de stockage provisoire (29).

4. Dispositif de distribution (8) selon la revendication 3, dans lequel les premiers moyens de poussée sont constitués d'un souffleur.

5. Dispositif de distribution (8) selon l'une des revendications 1 à 4, dans lequel les moyens de transfert du système de stockage provisoire se composent au moins :
- d'un premier rail de stockage (30) agencé pour guider et maintenir les composants (1') lors de leur transfert depuis l'arête (26) de plaque (23), ledit rail (30) étant disposé de manière attenante à l'extrémité inférieure (28) de l'arête (26) en position haute et suivant la trajectoire inclinée de ladite arête (26), l'extrémité (32) dudit rail (30) constituant la partie amont ;
- d'un second rail de stockage tampon (31) permettant l'accumulation provisoire des composant (1"), ce second rail (31) étant agencé verticalement le long du bord latéral (34) du plan vertical (12), ledit rail (31) constituant le prolongement du premier rail (30) ;
- des seconds moyens de poussée (37) agencés pour réaliser le transfert d'un composant (1',1") du premier rail (30) sur le second rail (31).

6. Dispositif de distribution (8) selon la revendication 5, dans lequel le second rail (31) est agencé verticalement vers le haut, les seconds moyens de poussée étant constitués par un pousseur vertical (37), les moyens de transfert comprenant en outre au moins un dispositif anti-retour (39) permettant de maintenir le composant (1") sur le second rail (31) une fois le transfert réalisé depuis le premier rail (30).

7. Dispositif de distribution (8) selon la revendication 6, dans lequel le pousseur vertical (37) est constitué d'un vérin agencé verticalement, dont l'extrémité (38) du piston (48) prend appui de manière directe ou indirecte sur un composant (1') disposé en bout du premier rail (30) pour le transférer sur le second rail (31), la course du piston (48) assurant le transfert du composant jusqu'au moins la position du dispositif anti-retour (39).

8. Dispositif de distribution (8) selon la revendication 6, dans lequel le pousseur vertical (37) est constitué par pièce de forme longitudinale, tel qu'une tige, agencée verticalement sous le second rail (31) pour prendre appui sur un composant (1') disposé en bout du premier rail (30) et le transférer sur le second rail (31), au-delà du dispositif anti-retour (39), ladite pièce étant activée par les moyens d'actionnement de la plaque (23).

9. Dispositif de distribution (8) selon l'une des revendications 5 à 8, lequel comprend un système de régulation de l'acheminement des composants du premier rail (30) vers le second rail (31), ledit système de régulation étant agencé pour obturer au moins partiellement le passage entre ledit premier rail (30) et ledit second rail (31) lorsque un composant (1") est en attente d'extraction en partie aval (44) du système de stockage provisoire (29).

10. Dispositif de distribution (8) selon les revendications 6 et 9, dans lequel le système de régulation est constitué du dispositif anti-retour (39), ledit dispositif anti-retour (39) comprenant une pièce de blocage (40') montée pivotante et un ressort de rappel (41') de ladite pièce de blocage (40'), cette pièce de blocage (40') comprenant :
- une portion supérieure (40'a) formant butée anti-retour sur un composant (1") engagé sur le second rail et ayant passé ladite pièce de blocage (40'),
- une portion intermédiaire (40'b) comprenant des moyens de maintien (56, 57) d'un composant (1") introduit sur le second rail tandis qu'un composant est déjà en attente en partie aval (44) du système de stockage (29) ;
- une portion inférieure (40'c) agencée soit pour obturer au moins partiellement le passage entre le premier rail (30) et le second rail (31) tant qu'un composant (1") est maintenu par la portion intermédiaire (40'b), soit pour libérer le passage entre ledit premier rail (30) et ledit second rail (31) lorsqu'aucun composant n'est maintenu par ladite portion intermédiaire (40'b).

11. Dispositif de distribution (8) selon l'une des revendications 5 à 10, dans lequel les moyens de transfert comprennent également au moins un troisième rail (45,46) attenant à l'extrémité supérieure (44) du second rail (31), ledit troisième (45) permettant le transfert des composants de l'intérieur vers l'extérieur du magasin (9).

12. Dispositif de distribution (8) selon l'une des revendications 1 à 11, lequel comprend des moyens de brassage (49) des composants disposés dans le magasin principal (9), lesdits moyens de brassage (49) étant agencés pour remuer les composants (1) et modifier leur position dans le magasin (9).

13. Dispositif de distribution (8) selon la revendication 12, dans lequel les moyens de brassage sont constitués par un élément (49) assujetti à la plaque (23), les déplacements verticaux de la plaque (23) permettant de déplacer ledit élément (49) dans le magasin (9) pour brasser les composants.

14. Dispositif de distribution (8) selon l'une des revendications 1 à 13, dans lequel les moyens d'actionnement de la plaque (23) sont constitués par un vérin pneumatique.

15. Dispositif de distribution (8) selon l'une des revendications 1 à 14, lequel comprend au moins un magasin secondaire (13) raccordé au niveau d'une ouverture (14) sur la paroi vertical (11) du magasin principal (9), ledit dispositif (8) comprenant une trappe (15) de fermeture de l'ouverture (14) et des moyens de commande (18,19,21) de la trappe (15) pour effectuer le remplissage du magasin principal (9) alimenté depuis le magasin secondaire (13).

16. Dispositif de distribution (8) selon la revendication 15, dans lequel la trappe (15) est montée coulissante verticalement par rapport à la paroi verticale (11) du magasin (9), pour assurer son déplacement au-dessus ou en dessous de l'ouverture (14) et libérer cette ouverture (14).

17. Dispositif de distribution (8) selon la revendication 16, dans lequel les moyens de commande de la trappe (15) se compose au moins d'une patte horizontale (21) assujettie à la face interne de la trappe (15) et s'étendant au dessus des composants (22) disposés dans le magasin principal (9), et d'un système d'actionnement vertical pour déplacer la trappe (15) et gérer sa position par rapport à l'ouverture (14), de manière à libérer ou obturer ladite ouverture (14) selon la quantité de composants dans le magasin principal (9).

## Claims

1. A dispenser device (8) for dispensing components (1, 1', 1"), in particular components designed for enabling parts to be assembled together by means of said components, each of which components is provided with a head and with a shank so as to form a circular shoulder or a circular groove (2), sai d dispenser device being **characterized in that** it comprises at least:
a main storage magazine (9) for storing said components (1) loose, which magazine extends vertically and has at least one vertical plane (12);
an extraction plate (23) for extracting components (1), which plate is arranged parallel to the vertical plane (12), said plate (23) having an edge (26) at its upper end (24), which edge (26) is inclined relative to the horizontal and is arranged to come to bear on the shoulders or in the grooves (2) of components (1);
actuation means for actuating the plate so as to drive it in up-and-down vertical reciprocating motion, and so as to remove the components (1) upwards while their grooves (2) are bearing against the edge (26); and
a temporary storage system (29) for temporarily storing the components (1, 1'), which system has an upstream portion (32) arranged to come into register with a lower end (28) of the inclined edge (26) when the plate (23) is in the high position, and to enable components (1, 1') to be transferred from the plate (23) into said storage system (29), said system being provided with transfer means (30, 31, 37, 39) arranged to convey the components (1', 1") in succession from the upstream portion (32) towards a downstream portion (44) that is designed to enable the components (1") to be extracted in succession from the device (8).

2. A dispenser device (8) according to claim 1, wherein the vertical plane (12) is constituted by one of the walls (11) of the magazine (9), the plate (23) being spaced apart from the wall at a distance e arranged to enable the component (1) to be positioned so that the shoulder or the groove (2) on or in the component (1) is disposed facing the edge (26) on said plate (23).

3. A dispenser device (8) according to claim 1 or claim 2, which device further comprises first pusher means (27) for pushing the components (1) disposed on the edge (26) so as to guarantee that said components (1) are moved towards the lower end (28) of said edge (26), and so as to guarantee that said components are transferred to the upstream portion (32) of the temporary storage system (29).

4. A dispenser device (8) according to claim 3, wherein the first pusher means are constituted by a blower.

5. A dispenser device (8) according to any one of claims 1 to 4, wherein the transfer means of the temporary storage system are made up of at least:
a storage first rail (30) arranged to guide and to hold the components (1') while they are being transferred from the edge (26) of the plate (23), which rail (30) is disposed in such a manner as to adjoin the lower end (28) of the edge (26) in the high position and as to extend the inclined path of said edge (26), the end (32) of said rail (30) constituting the upstream portion;
a buffer storage second rail (31) making it possible for the components (1") to be stored temporarily, which second rail (31) is arranged vertically along the side edge (34) of the vertical plane (12), said rail (31) constituting an extension to the first rail (30); and
second pusher means (37) arranged to transfer a component (1', 1") from the first rail (30) to the second rail (31).

6. A dispenser device (8) according to claim 5, wherein the second rail (31) is arranged vertically upwards, the second pusher means being constituted by a vertical pusher (37), the transfer means further comprising at least one non-return device (39) making it possible to maintain the component (1") in the second rail (31) once it has been transferred from the first rail (30).

7. A dispenser device (8) according to claim 6, wherein the vertical pusher (37) is constituted by an actuator that is arranged vertically, and wherein the end (38) of the piston (48) comes to bear directly or indirectly against a component (1') disposed at the end of the first rail (30) so as to transfer it to the second rail (31), the stroke of the piston (48) guaranteeing that the component is transferred to at least the position of the non-return device (39).

8. A dispenser device (8) according to claim 6, wherein the vertical pusher (37) is constituted by a part of longitudinal shape, such as a rod, arranged vertically under the second rail (31) so as to come to bear against a component (1') disposed at the end of the first rail (30) and so as to transfer it to the second rail (31) beyond the non-return device (39), said part being activated by the actuation means for actuating the plate (23).

9. A dispenser device (8) according to any one of claims 5 to 8, which device further comprises a regulation system for regulating conveying of the components from the first rail (30) to the second rail (31), said regulation system being arranged to close off at least in part the passage between said first rail (30) and said second rail (31) when a component (1") is awaiting extraction in the downstream portion (44) of the temporary storage system (29).

10. A dispenser device (8) according to claims 6 and 9, wherein the regulation system is constituted by the non-return device (39), said non-return device (39) comprising a pivotally mounted locking piece (40') and a return spring (41') for urging said locking piece (40') to return to its locking position, said locking piece (40') comprising:
an upper portion (40'a) forming a non-return abutment against a component (1") that is engaged in the second rail and that has gone past said locking piece (40');
an intermediate portion (40'b) comprising holding means (56, 57) for holding a component (1") that is inserted into the second rail while a component is already waiting in the downstream portion (44) of the storage system (29); and
a lower portion (40'c) arranged for either closing off, at least in part, the passage between the first rail (30) and the second rail (31) so long as a component (1") is held by the intermediate portion (40'b), or opening up the passage between said first rail (30) and said second rail (31) whenever no component is held by said intermediate portion (40'b).

11. A dispenser device (8) according to any one of claims 5 to 10, wherein the transfer means further comprise at least a third rail (45, 46) adjoining the upper end (44) of the second rail (31), said third rail (45) making it possible to transfer components from the inside of the magazine (9) to the outside thereof.

12. A dispenser device (8) according to any one of claims 1 to 11, which device further comprises mixer means (49) for mixing the components dumped in the main magazine (9), said mixer means (49) being arranged to stir the components (1) and to change their positions in the magazine (9).

13. A dispenser device (8) according to claim 12, wherein the mixer means are constituted by an element (49) secured to the plate (23), the vertical movements of the plate (23) making it possible to move said element (49) in the magazine (9) for mixing the components.

14. A dispenser device (8) according to any one of claims 1 to 13, wherein the actuation means for actuating the plate (23) are constituted by a pneumatic actuator.

15. A dispenser device (8) according to any one of claims 1 to 14, which device further comprises at least one secondary magazine (13) coupled at an opening (14) to the vertical wall (11) of the main magazine (9), said device (8) further comprising a gate (15) for closing the opening (14) and control means (18, 19, 21) for controlling the gate (15) so as to fill the main magazine (9) by it being fed from the secondary magazine (13).

16. A dispenser device (8) according to claim 15, wherein the gate (15) is mounted to slide vertically relative to the vertical wall (11) of the magazine (9), so as to move it above or below the opening (14) and so as to open up said opening (14).

17. A dispenser device (8) according to claim 16, wherein the control means for controlling the gate (15) comprise at least one horizontal ledge (21) secured to or integral with the inside face of the gate (15) and extending above the components (22) dumped in the main magazine (9), and a vertical actuation system for moving the gate (15) and for managing its position relative to the opening (14), in such a manner as to open up or as to close off said opening (14) depending on the quantity of components in the main magazine (9).

## Patentansprüche

1. Vorrichtung zur Ausgabe (8) von Komponenten (1, 1', 1"), die insbesondere für die Montage von Teilen mittels der Komponenten bestimmt sind, wobei die Komponenten mit einem Kopf und einer Achse, die eine kreisförmige Schulter oder eine kreisförmige Nut (2) bilden, versehen sind, **dadurch gekennzeichnet, daß** sie wenigstens umfaßt:
- ein Hauptmagazin (9) zur losen Lagerung der Komponenten (1), wobei dieses Magazin vertikal verläuft und wenigstens eine Vertikalebene (12) aufweist;
- eine Platte zum Herausnehmen (23) von Komponenten (1), die parallel zu der Vertikalebene (12) angeordnet ist, wobei die Platte (23) an ihrem oberen Ende (24) eine gegenüber der Horizontalen geneigte Kante (26) aufweist, wobei diese Kante (26) dazu eingerichtet ist, sich an der Schulter oder in der Nut (2) von Komponenten (1) abzustützen;
- Mittel zum Betätigen der Platte, um diese von unten nach oben sowie umgekehrt zu bewegen und um Komponenten (1), deren Schulter oder Nut (2) an der Kante (26) in Anlage ist, nach oben herauszunehmen;
- ein System zum vorläufigen Lagern (29) der Komponenten (1, 1'), umfassend einen vorliegenden Teil (32), der dazu eingerichtet ist, an ein unteres Ende (28) der geneigten Kante (26) anzuschließen, wenn sich die Platte (23) in der oberen Position befindet, und die Überführung von Komponenten (1, 1') von der Platte (23) auf das Lagerungssystem (29) zu ermöglichen, wobei das System mit Transportmitteln (30, 31, 37, 39) ausgestattet ist, die dazu eingerichtet sind, die Komponenten (1', 1") nacheinander von dem vorliegenden Teil (32) zu einem nachliegenden Teil (44) zu befördern, der für das sukzessive Herausnehmen der Komponenten (1 ") aus der Vorrichtung (8) vorgesehen ist.

2. Ausgabevorrichtung (8) nach Anspruch 1, die Vertikalebene (12) ist von einer der Wände (11) des Magazins (9) gebildet, wobei die Platte (23) von der Wand um einen Abstand "e" beabstandet ist, der eingerichtet ist, um das Positionieren der Komponente (1) derart zu ermöglichen, daß die Schulter oder die Nut (2) an der Komponente (1) gegenüber der Kante (26) an der Platte (23) angeordnet ist.

3. Ausgabevorrichtung (8) nach einem der Ansprüche 1 oder 2, die erste Mittel für eine Schubwirkung (27) auf die Komponenten (1) umfaßt, die an der Kante (26) angeordnet sind, um das Bewegen der Komponenten (1) zum unteren Ende (28) dieser Kante (26) sowie das Überführen auf den vorliegenden Teil (32) des Systems zum vorläufigen Lagern (29) sicherzustellen.

4. Ausgabevorrichtung (8) nach Anspruch 3, wobei die ersten Schubmittel von einem Gebläse gebildet sind.

5. Ausgabevorrichtung (8) nach einem der Ansprüche 1 bis 4, wobei die Transportmittel des Systems zum vorläufigen Lagern wenigstens bestehen aus:
- einer ersten Lagerungsschiene (30), die dazu eingerichtet ist, die Komponenten (1') bei ihrem Transport von der Kante (26) der Platte (23) aus zu führen und zu halten, wobei die Schiene (30) an das untere Ende (28) der Kante (26) -in der oberen Position- angrenzend und entlang des geneigten Verlaufs der Kante (26) angeordnet ist, wobei das Ende (32) der Schiene (30) den vorliegenden Teil bildet,
- einer zweiten Schiene zur Pufferlagerung (31), die das vorläufige Speichern der Komponenten (1") ermöglicht, wobei diese zweite Schiene (31) entlang des seitlichen Randes (34) der Vertikalebene (12) vertikal angeordnet ist, wobei die Schiene (31) die Fortsetzung der ersten Schiene (30) bildet,
- den zweiten Schubmitteln (37), die dazu eingerichtet sind, das Überführen einer Komponente (1', 1") von der ersten Schiene (30) auf die zweite Schiene (31) zu vollziehen.

6. Ausgabevorrichtung (8) nach Anspruch 5, wobei die zweite Schiene (31) vertikal nach oben ausgerichtet ist, wobei die zweiten Schubmittel von einer vertikalen Schiebevorrichtung (37) gebildet sind, wobei die Transportmittel ferner wenigstens eine Rücklaufsicherung (39) umfassen, die ermöglicht, die Komponente (1 ") auf der zweiten Schiene (31) zu halten, sobald die Überführung von der ersten Schiene (30) aus erfolgt ist.

7. Ausgabevorrichtung (8) nach Anspruch 6, wobei die vertikale Schiebevorrichtung (37) von einem vertikal angeordneten Zylinder gebildet ist, dessen Ende (38) des Kolbens (48) sich direkt oder indirekt an einer am Ende der ersten Schiene (30) angeordneten Komponente (1') abstützt, um sie auf die zweite Schiene (31) zu überführen, wobei der Hub des Kolbens (48) den Transport der Komponente wenigstens bis zur Position der Rücklaufsicherung (39) sicherstellt.

8. Ausgabevorrichtung (8) nach Anspruch 6, wobei die vertikale Schiebevorrichtung (37) von einem Teil mit länglicher Form, wie einer Stange gebildet ist, das vertikal unter der zweiten Schiene (31) angeordnet ist, um sich an einer am Ende der ersten Schiene (30) angeordneten Komponente (1') abzustützen und um sie auf die zweite Schiene (31), jenseits der Rücklaufsicherung (39) zu überführen, wobei das Teil durch die Mittel zum Betätigen der Platte (23) aktiviert wird.

9. Ausgabevorrichtung (8) nach einem der Ansprüche 5 bis 8, die ein System zum Regulieren der Beförderung der Komponenten von der ersten Schiene (30) zur zweiten Schiene (31) umfaßt, wobei das Regulierungssystem dazu eingerichtet ist, den Durchgang zwischen der ersten Schiene (30) und der zweiten Schiene (31) wenigstens teilweise zu verschließen, wenn eine Komponente (1 ") am nachliegenden Teil (44) des Systems zur vorläufigen Lagerung (29) auf ihr Herausnehmen wartet.

10. Ausgabevorrichtung (8) nach den Ansprüchen 6 und 9, wobei das Regulierungssystem von der Rücklaufsicherung (39) gebildet ist, wobei die Rücklaufsicherung (39) ein schwenkbar angebrachtes Blockierteil (40') sowie eine Feder zum Rückstellen (41') des Blockierteils (40') umfaßt, wobei dieses Blockierteil (40') umfaßt:
- einen oberen Abschnitt (40'a), der einen Rücklaufsicherungsanschlag an einer Komponente (1 "), die auf der zweiten Schiene in Eingriff ist und das Blockierteil (40') passiert hat, bildet,
- einen Zwischenabschnitt (40'b) mit Mitteln zum Halten (56, 57) einer auf die zweite Schiene gebrachten Komponente (1 "), während eine Komponente bereits an dem nachliegenden Teil (44) des Lagerungssystems (29) in Wartestellung ist,
- einen unteren Abschnitt (40'c), der eingerichtet ist, um entweder den Durchgang zwischen der ersten Schiene (30) und der zweiten Schiene (31) wenigstens teilweise zu verschließen, solange eine Komponente (1") von dem Zwischenabschnitt (40'b) gehalten wird, oder um den Durchgang zwischen der ersten Schiene (30) und der zweiten Schiene (31) freizugeben, wenn keine Komponente von dem Zwischenabschnitt (40'b) gehalten wird.

11. Ausgabevorrichtung (8) nach einem der Ansprüche 5 bis 10, wobei die Transportmittel auch wenigstens eine dritte Schiene (45, 46), die an das obere Ende (44) der zweiten Schiene (31) angrenzt, umfassen, wobei die dritte Schiene (45) den Transport der Komponenten vom Innenraum zur Außenseite des Magazins (9) ermöglicht.

12. Ausgabevorrichtung (8) nach einem der Ansprüche 1 bis 11, die Mittel zum Umwälzen (49) der in dem Hauptmagazin (9) angeordneten Komponenten umfaßt, wobei die Umwälzmittel (49) dazu eingerichtet sind, die Komponenten (1) zu bewegen und ihre Position in dem Magazin (9) zu verändern.

13. Ausgabevorrichtung (8) nach Anspruch 12, wobei die Umwälzmittel von einem an der Platte (23) gut befestigten Element (49) gebildet sind, wobei die Senkrechtbewegungen der Platte (23) ermöglichen, das Element (49) in dem Magazin (9) zu verschieben, um die Komponenten umzuwälzen.

14. Ausgabevorrichtung (8) nach einem der Ansprüche 1 bis 13, wobei die Mittel zum Betätigen der Platte (23) von einem Pneumatikzylinder gebildet sind.

15. Ausgabevorrichtung (8) nach einem der Ansprüche 1 bis 14, die wenigstens ein Sekundärmagazin (13) umfaßt, das im Bereich einer Öffnung (14) an die vertikale Wand (11) des Hauptmagazins (9) angesetzt ist, wobei die Vorrichtung (8) eine Klappe (15) zum Verschließen der Öffnung (14) sowie Mittel zum Betätigen (18, 19, 21) der Klappe (15) umfaßt, um das Befüllen des Hauptmagazins (9), das von dem Sekundärmagazin (13) aus gespeist wird, zu vollziehen.

16. Ausgabevorrichtung (8) nach Anspruch 15, wobei die Klappe (15) gegenüber der vertikalen Wand (11) des Magazins (9) vertikal verschiebbar angebracht ist, um ihr Bewegen oberhalb oder unterhalb der Öffnung (14) sicherzustellen und diese Öffnung (14) freizugeben.

17. Ausgabevorrichtung (8) nach Anspruch 16, wobei die Mittel zum Betätigen der Klappe (15) wenigstens aus einer horizontalen Lasche (21), die an der Innenseite der Klappe (15) gut befestigt ist und sich oberhalb der in dem Hauptmagazin (9) angeordneten Komponenten (22) erstreckt, sowie aus einem System zum vertikalen Betätigen bestehen, um die Klappe (15) zu bewegen und um ihre Position gegenüber der Öffnung (14) derart zu steuern, daß die Öffnung (14) entsprechend der Menge an Komponenten in dem Hauptmagazin (9) freigegeben oder verschlossen wird.
